# EUROPEAN PATENT APPLICATION

(11) **EP 4 060 839 A1**
(43) Date of publication of application: **21.09.2022**
(21) Application number: 22157876.8
(22) Date of filing: 22.02.2022
(51) Int. Cl.: H02G 3/08, H02G 3/22

(54) **CABLE GROMMET ASSEMBLY FOR RUNNING AND GUIDING A CABLE**

(30) Priority: 18.03.2021 IT 202100006518
(71) Applicant: Detas S.p.A., 25086 Rezzato, (BS) (IT)
(72) Inventor: DURIN, Giorgio, I-25086 Rezzato, Brescia (IT)
(74) Representative: Crippa, Paolo Ernesto

(57) **Abstract**

It is the object of the present invention a cable grommet assembly (1) for running and guiding at least one cable (12) through an opening so that the cable (12) is retained and sealed; said assembly (1) comprises a frame (2) which forms a rim (3) delimiting a central opening (4); said frame (2) comprises
- a first half-frame (17) having first half-frame protrusions (53) and recesses (54) ;
- a second half-frame (18) having second half-frame protrusions (56) and recesses (57) ;
wherein when said first half-frame (17) is connected to said second half-frame (53), thus forming said frame (2) which forms a rim (3) delimiting a central opening (4), at least some first half-frame recesses (54) accommodate at least some of the second half-frame protrusions (56), and
wherein when said first half-frame (17) is connected to said second half-frame (18), thus forming said frame (2) which forms a rim (3) delimiting a central opening (4), at least some second half-frame recesses (57) accommodate at least some of the first half-frame protrusions (53);

- said frame (2) comprises at least one frame seat (7);
- said assembly (1) comprises at least one cable gripping element (9);
- said cable gripping element (9) comprises at least one coupling element (14);
- said at least one coupling element (14) is inserted into said at least one frame seat (7) so that said at least one cable gripping element (9) at least partially obstructs said central opening (4);
characterized in that
- said first half-frame (17) comprises at least a first partition seat (58);
- said second half-frame (18) comprises at least a second partition seat (59);
- said cable grommet assembly (1) comprises at least one partition element (60) which comprises at least a first bulge (61) and at least a second bulge (62); wherein when said first half-frame (17) is connected to said second half-frame (18), thus forming said frame (2) which forms a rim (3) delimiting a central opening (4), said at least a first partition element bulge (61) is inserted into said at least a first partition seat (58), and said at least a second partition element bulge (62) is inserted into said at least a second partition seat (59), wherein said at least one partition element (60) removably divides said central opening (4) into at least two central openings, also referred to as first and second central opening partitions (63, 64), each being of a smaller size than said central opening (4).

## Description

### . Field of the invention

**.** The present invention relates to a cable grommet assembly for running and guiding a cable, also with connectors, through an opening, e.g., of a container, such as an electrical cabinet, so that the cable is restrained and sealed, preventing fluids and/or gases and/or dust from entering or exiting into or from said container and at the same time preventing the cable from being torn or mistakenly moved from its predetermined position in the installation.

**.** In particular, the present invention relates to assemblies which are used when a secure connection between machinery and equipment is required, and which are robust and reliable, even in applications in which abundant water, dust, vibration, or extreme temperatures are present.

**.** Even more particularly, the present invention relates to cable grommet assemblies which allow a fast and safe running of cables with connectors, particularly useful for maintaining and overhauling installations and machinery.

### . Background art

**.** Cable routing assemblies allow the running, sealing, and fastening of cables with connectors and cables without connectors from one environment to another which must be separated for safety reasons or hydraulic or mechanical sealing. The main features of these assemblies are the provision of a frame or batten, preferably divisible, and cable gripping elements, or cable rubber grommets, or cable grommet inserts, which are preferably openable and allow the rubber grommet to be fitted to a cable quickly, easily and costeffectively.

**.** The divisible batten and the openable rubber grommets prevent the need to cut and wire cables already with connectors. In this manner, cable shielding and sealing are guaranteed for electrical cables and sheaths of various diameters.

**.** These rubber grommets need to remain firmly anchored to the strip.

**.** In all known solutions, the rubber grommets have their own seat in the frame which guides them on opposite sides and are securely fixed to the frame even during the step of assembly.

**.** The fixing of the rubber grommet to the frame also during the step of assembly is seen in the sector as a fundamental need to be solved to allow the composition of the simple assembly during the step of assembly and the preservation of the arrangement of the rubber grommets during all the assembly operations of the assembly, its closing and its installation to the wall of the container.

**.** For example, solutions of this type are known from US7806374, US6002088, EP1376795, EP0562766, DE19959185, DE29911305U, EP1236256, WO9906747, DE4020180, US3742119, DE3619183, EP1000285, US3397431, DE4434202, US5209440, EP2746634, EP2614563, WO2020089031, EP3221940, NZ534101, US6561466.

**.** All these known solutions, although satisfactory from many points of view, do not make it possible to solve the felt need to facilitate the correct positioning of the cable gripping element, or rubber grommet, when inserted in the frame, but not perfectly in its final destination position.

**.** On the other hand, this requirement strongly contrasts with the need to ensure firm positioning of the cable gripping element in the frame even when the frame is open or during the step of assembly, to prevent the rubber grommets from coming out and separating from the frame during the assembly of the assembly, thus unacceptably complicating the assembly and disassembly operations which must be increasingly fast and at the same time safe and precise.

**.** Therefore, the need is strongly felt for a cable grommet assembly which allows, during operation, the anchoring of the cable gripping element firmly and tightly to the frame, and, during the step of assembly, despite preventing the accidental separation of the cable gripping element from the frame, allows the repeated, fast and safe adjustment of the position of the cable gripping element already coupled to the frame itself.

**.** This requirement is even more felt when the frame accommodates a plurality of several cable gripping elements and it is necessary to displace a plurality of cable gripping elements already inserted and coupled to the frame itself to insert a further cable gripping element between these elements, avoiding the disassembly of the entire previous assembly.

**.** Furthermore, the need is strongly felt to distribute the spaces within the same frame differently at different times during the life of the assembly, also according to the size of the cables to be run through the frame.

### . Solution

**.** These and other objects are achieved by a cable grommet assembly according to claim **1,** and by a method according to claim **12.**

**.** Some advantageous embodiments are the object of the dependent claims.

**.** By virtue of the present invention, it is possible to connect cable gripping elements to the frame in a fast and safe manner, facilitating the movement of the cable gripping elements in the frame to organize the frame as desired also according to the size of the cable to be used.

**.** By virtue of the present invention, the cables, e.g., electrical cables with connectors, as well as cables without connectors, can be rapidly inserted into electrical equipment, switchboards, or machines. At the same time, the cables are sealed with a high degree of tightness.

**.** By virtue of the present invention, during assembly or maintenance, it is possible to quickly and safely change, or rearrange, the arrangement of the cable gripping elements present on a frame and even to remove and/or insert new cable gripping elements in the same frame even of different sizes than those initially inserted, without having to use another frame.

**.** Furthermore, by virtue of the suggested solution, it is possible to house in the same frame, either simultaneously or selectively, a plurality of cable gripping elements, even of different sizes that fill the central frame opening in different ways, without because of this having to provide frames of different shapes according to the type or size of the cable gripping element that is intended to be used, as necessary in the solutions of the prior art.

**.** Even more, by virtue of the suggested solution, it is possible to reconfigure the arrangement of the cable gripping elements or to replace the cable gripping elements with other elements of larger or smaller size, without having to completely disassemble the cable gripping assembly and even without having to remove the cable gripping assembly from the wall to which it is connected or from the container to which it is connected.

### . Figures

. Further features and advantages of the invention will become apparent from the description provided below of preferred exemplary embodiment thereof, given by way of non-limiting example, with reference to the accompanying drawings, in which:

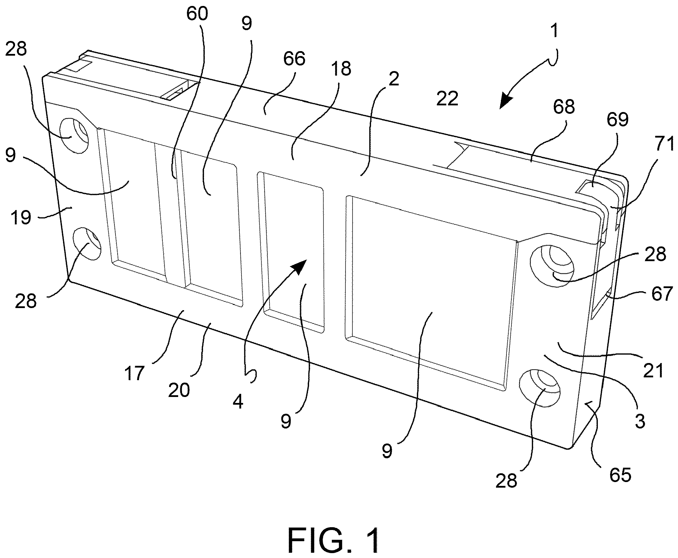

- figure 1 shows an axonometric view of a cable grommet assembly according to a first embodiment;

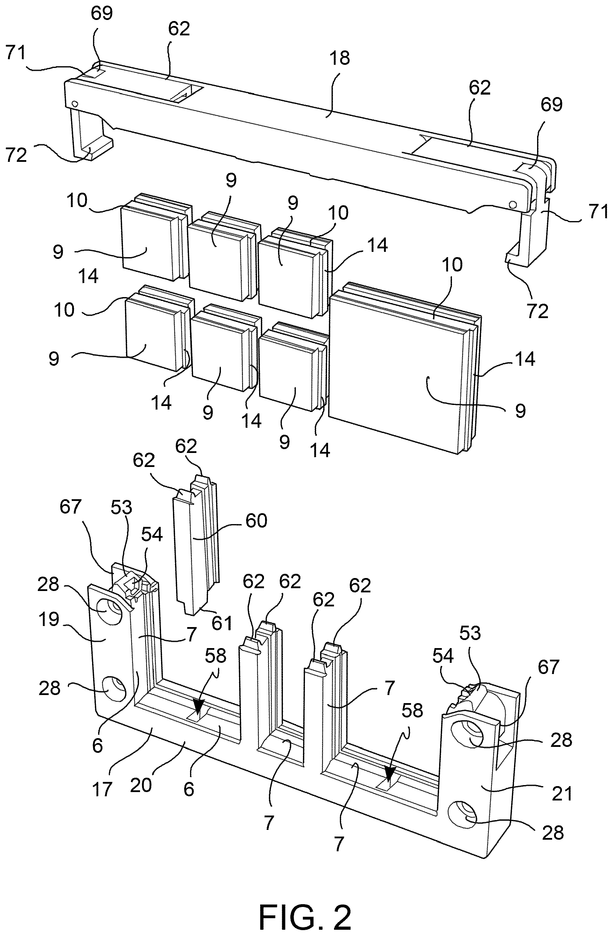

- figure 2 is an axonometric view of the assembly in figure 1 with parts separated from a first point of view;

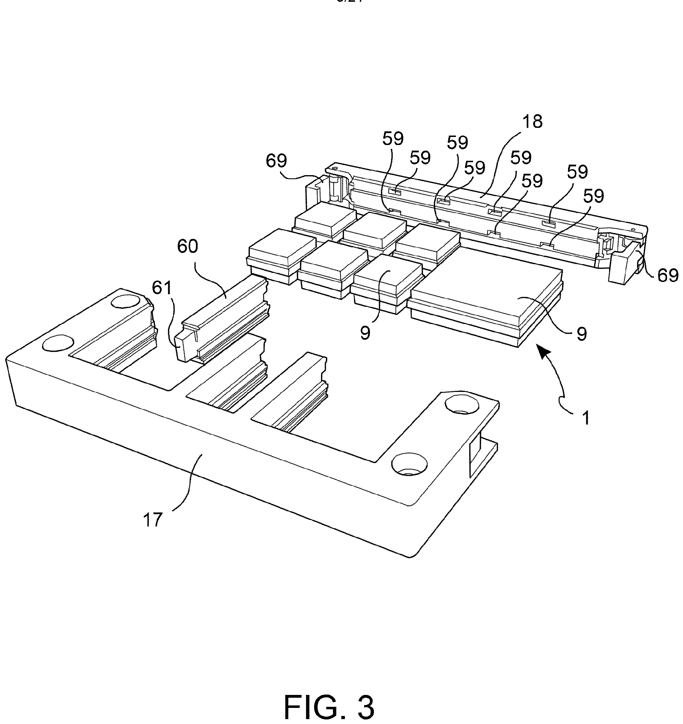

- figure 3 is an axonometric view of the assembly in figure 1 with parts separated from a second point of view;

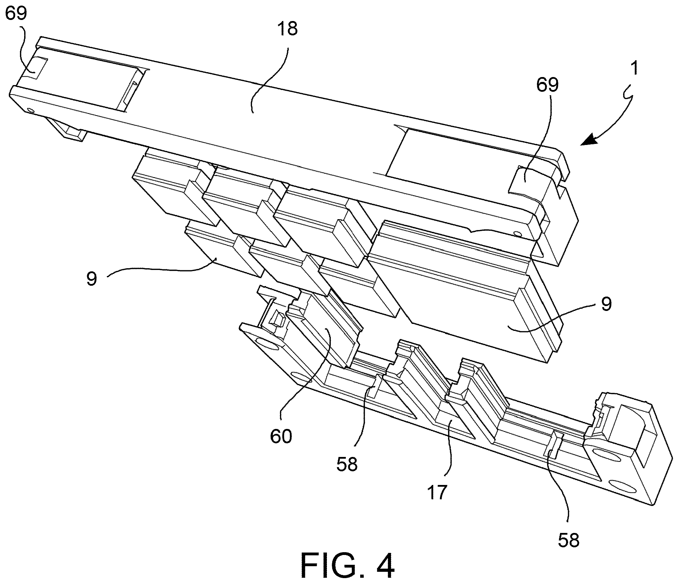

- figure 4 is an axonometric view of the assembly in figure 1 with parts separated from a third point of view;

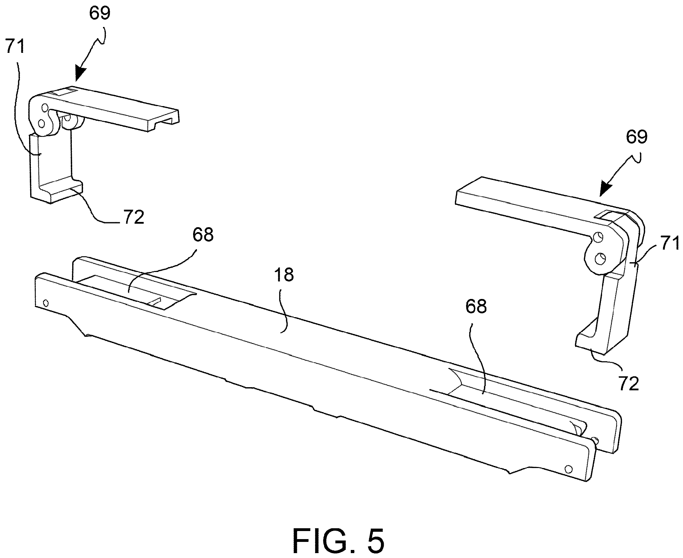

- figure 5 is an axonometric view of a detail of the assembly of figure 1 with parts separated, i.e., the second half-frame or cross member and the snap-coupling clamp locking element;

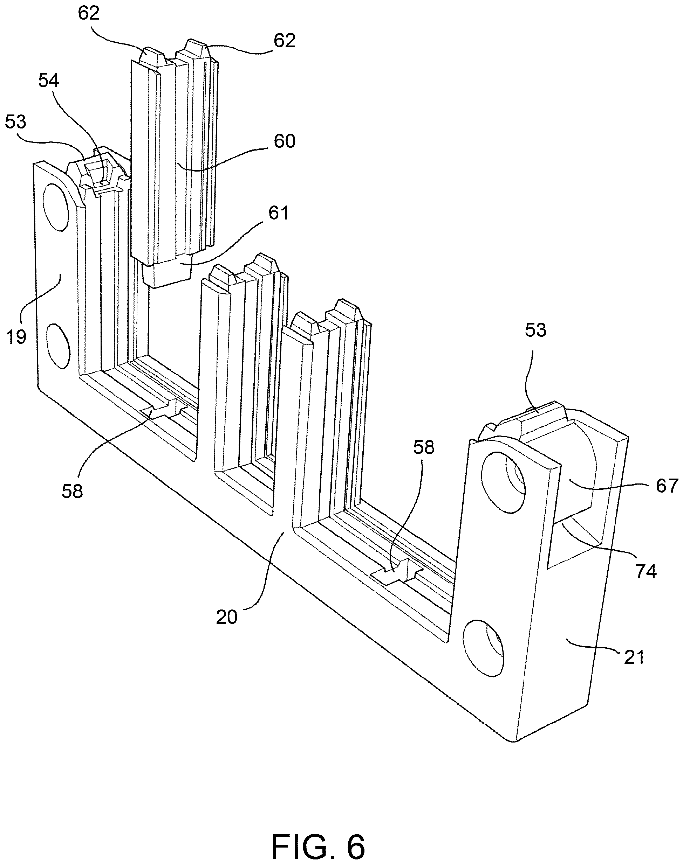

- figure 6 shows an axonometric view of a further detail of the assembly of figure 1 with parts separated, i.e., the first half-frame and the removable partition element;

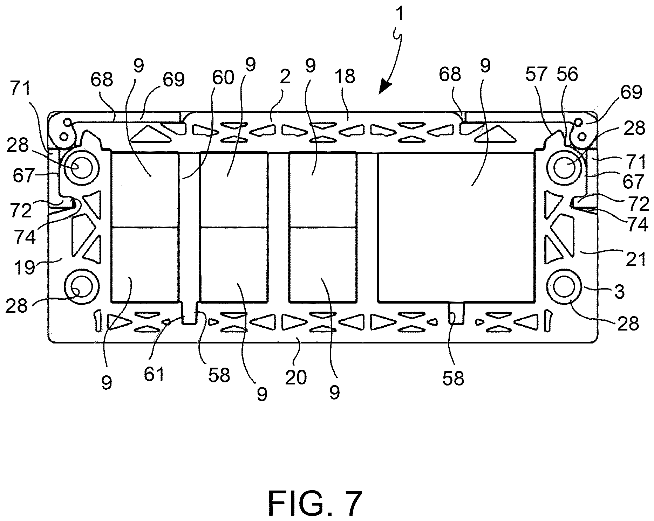

- figure 7 is a section view taken along a center plane of the assembly in figure 1;

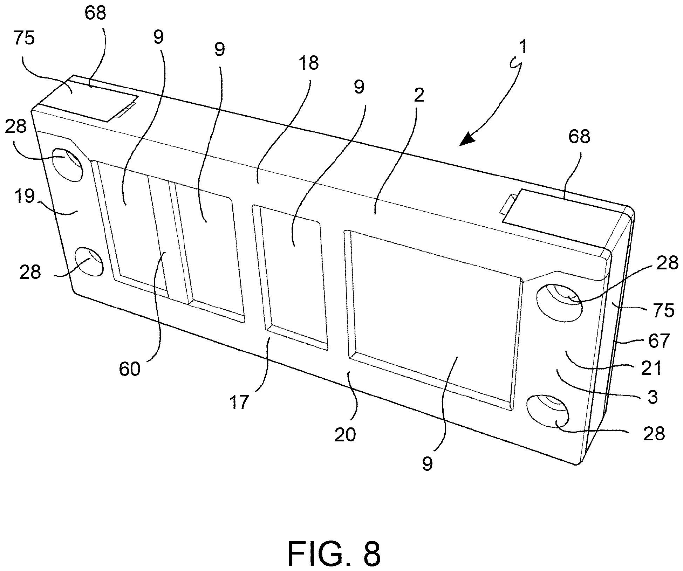

- figure 8 shows an axonometric view of a cable grommet assembly according to a second embodiment;

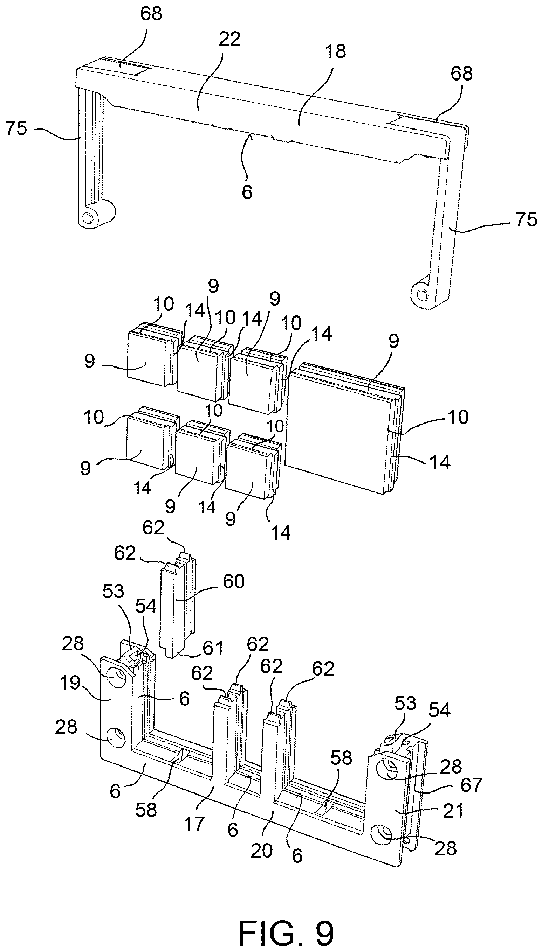

- figure 9 is an axonometric view of the assembly in figure 8 with parts separated from a first point of view;

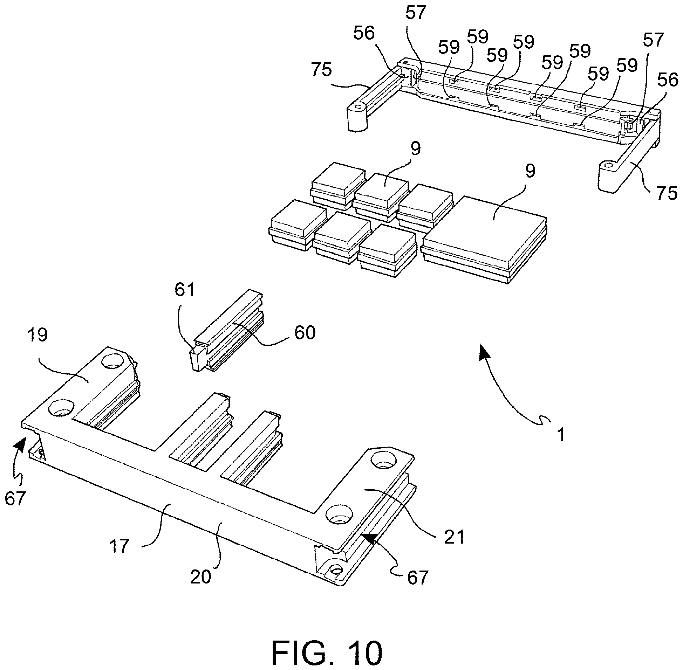

- figure 10 is an axonometric view of the assembly in figure 8 with parts separated from a second point of view;

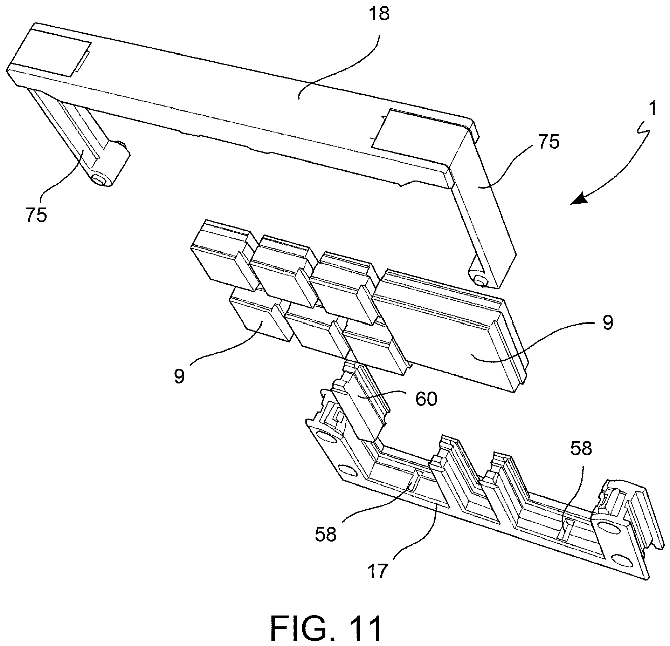

- figure 11 is an axonometric view of the assembly in figure 8 with parts separated from a third point of view;

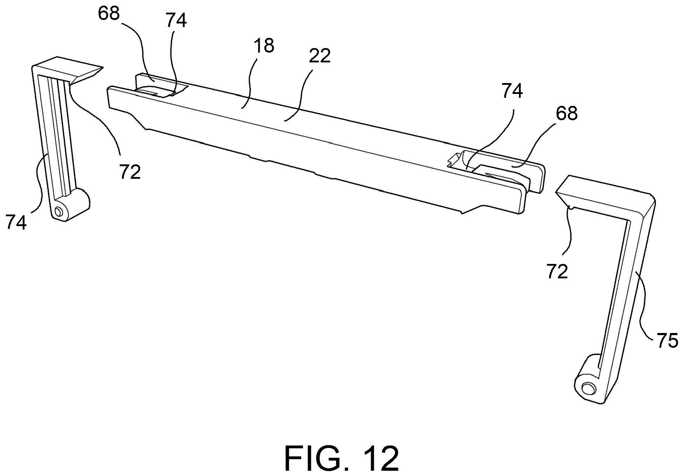

- figure 12 is an axonometric view of a detail of the assembly of figure 8 with parts separated, i.e., the second half-frame or cross member and the lever locking element;

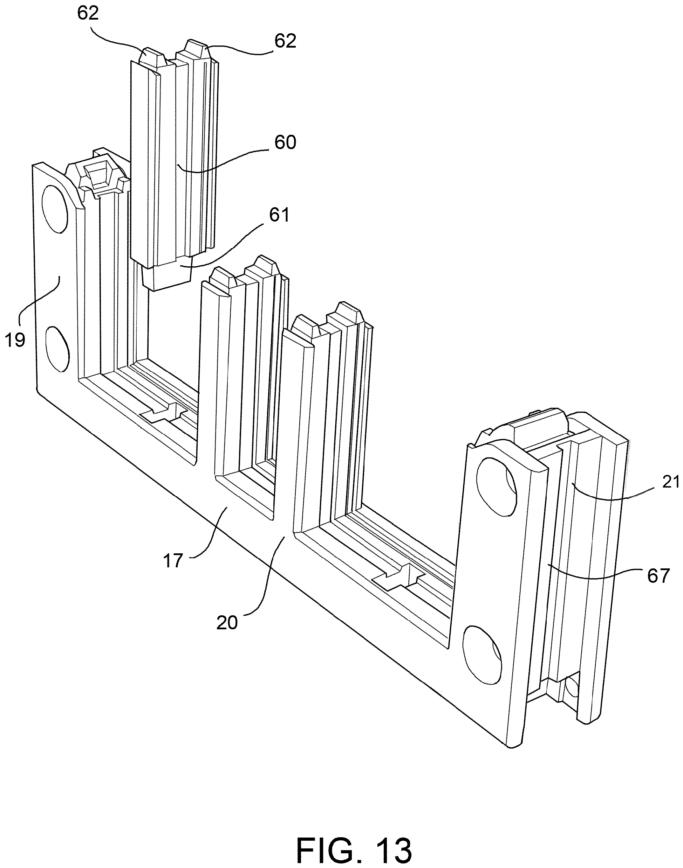

- figure 13 shows an axonometric view of a further detail of the assembly of figure 8 with parts separated, i.e., the first half-frame and the removable partition element;

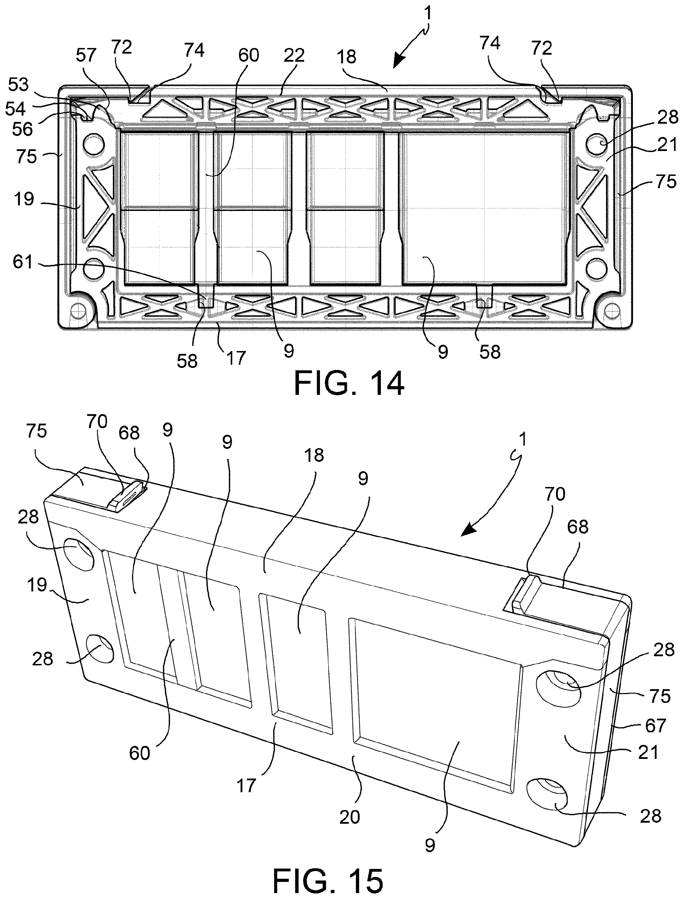

- figure 14 is a section view taken along a center plane of the assembly in figure 8;
- figure 15 shows an axonometric view of a cable grommet assembly according to a third embodiment;

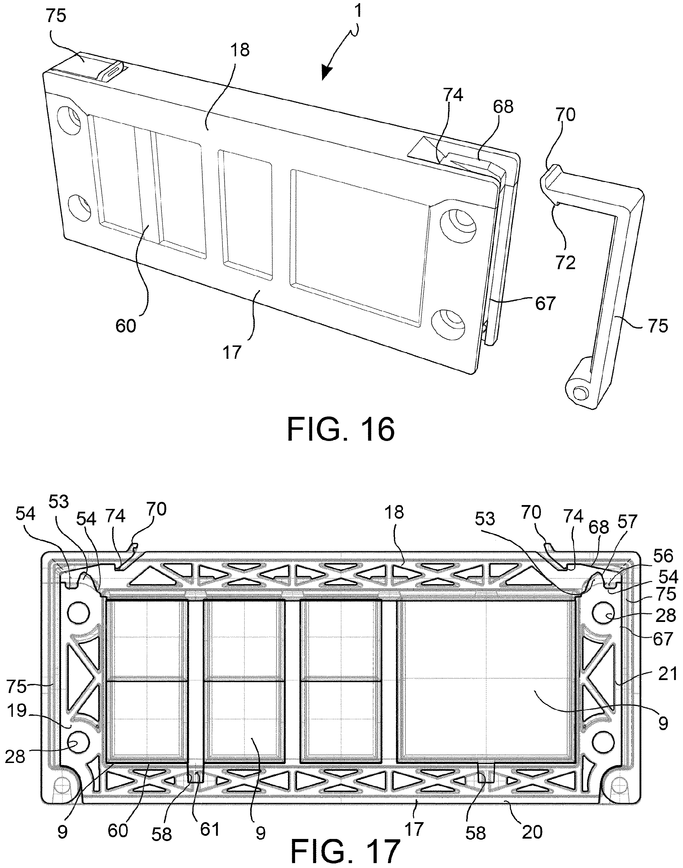

- figure 16 is an axonometric view of the assembly of figure 15 with parts separated, in which the lever is separated from the half-frames showing the half-frame edge seats;
- figure 17 is a section view taken along a center plane of the assembly in figure 15;
- figure 18 shows an axonometric view of a cable grommet assembly according to a fourth embodiment;
- figure 19 shows the assembly of figure 18 in axonometric view but from the opposite side to the one shown in figure 18;

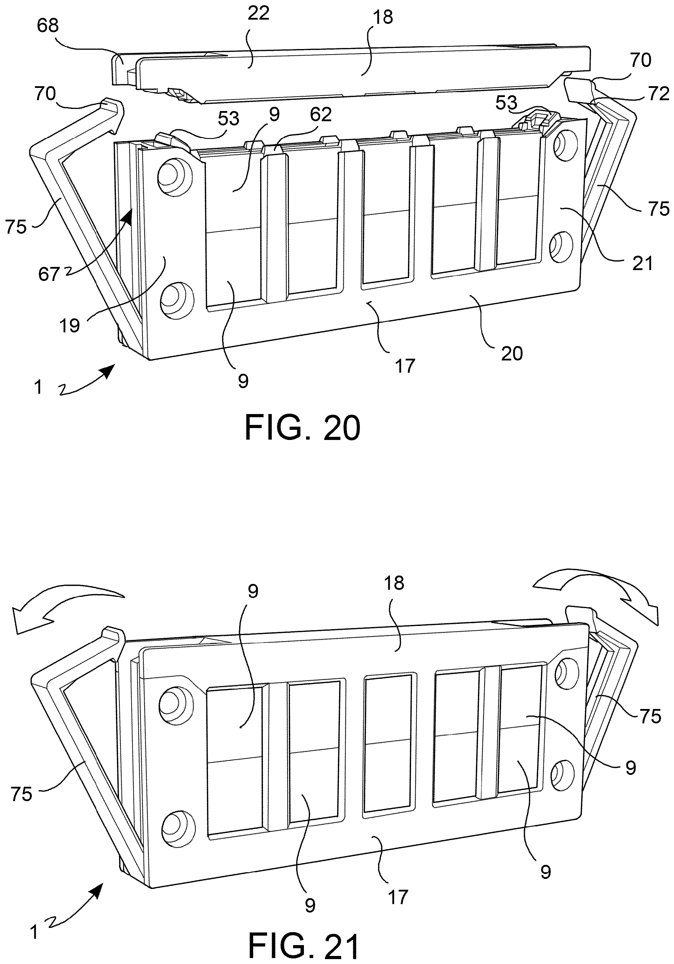

- figure 20 shows an axonometric view with separated parts of the assembly in figure 18 in which the levers are in the open position and the second half-frame is removed;
- figure 21 shows an axonometric view of the assembly of figure 18 in which the levers are in the open position and the second half-frame is connected to the first half-frame;
- figure 22 shows an axonometric view with separated parts according to a first point of view, the assembly of figure 18 in which the levers are in the open position and the second half-frame is removed, some cable gripping elements are removed and a partition element is removed;

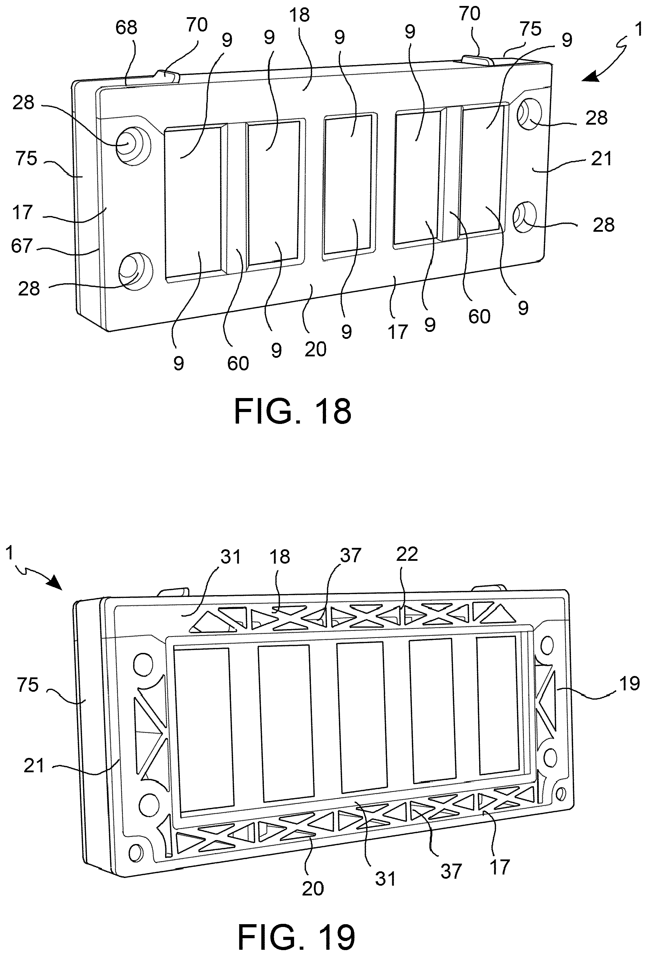

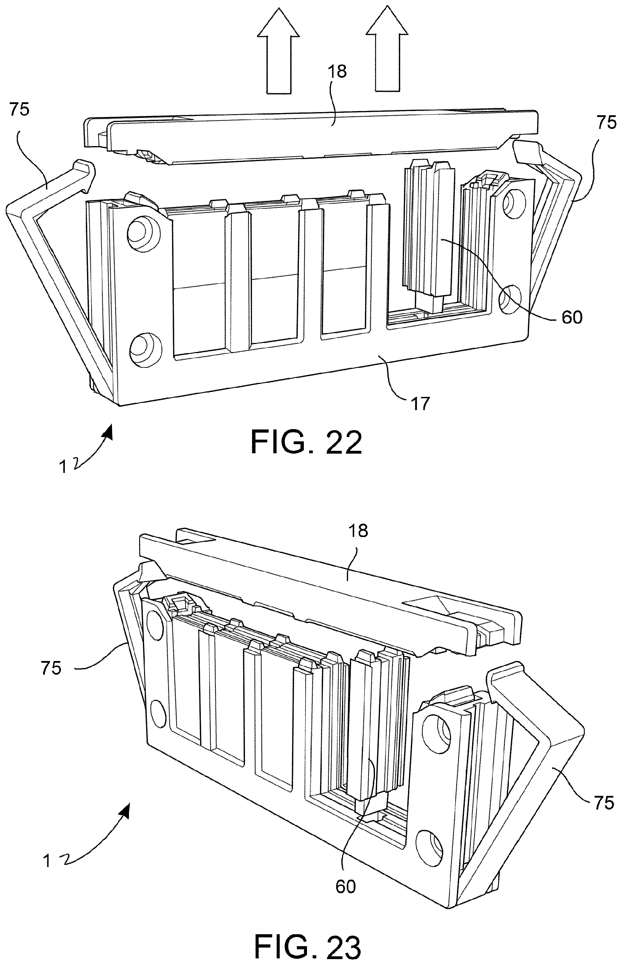

- figure 22 shows an axonometric view with separated parts according to a second point of view, the assembly of figure 18 in which the levers are in the open position and the second half-frame is removed, some cable gripping elements are removed and a partition element is removed;

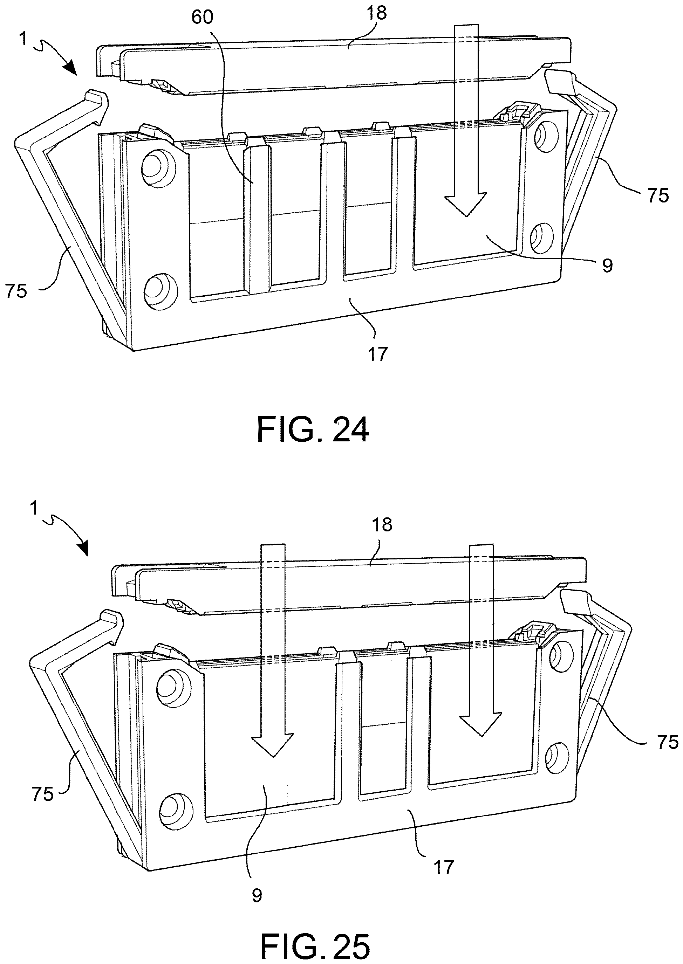

- figure 24 shows an axonometric view with separated parts of the assembly in figure 18 in which the levers are in the open position and the second half-frame is removed, some of the cable gripping elements are removed and a partition element is extracted and completely removed and a cable gripping element of larger dimensions than all the removed cable gripping elements is inserted in the place of the partition element and the removed cable gripping elements;
- figure 25 shows an axonometric view with separated parts of the assembly in figure 18 in which the levers are in the open position and the second half-frame is removed, some of the cable gripping elements are removed and two partition elements are extracted and completely removed and a cable gripping element of larger dimensions than all the removed cable gripping elements is inserted in the place of the partition elements and of the removed cable gripping elements, thereby filling the central opening completely;

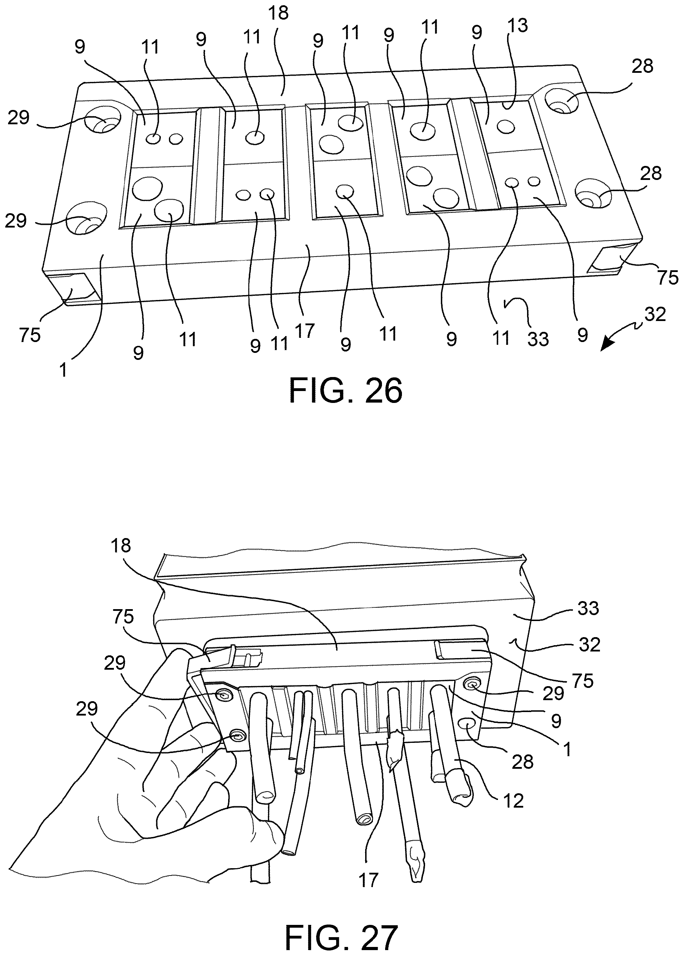

- figure 26 shows an axonometric view of a further embodiment of a cable gripping assembly, in which the cable gripping elements are represented with pre-formed openings for grasping the cables and in which the screw seats accommodate screws for fixing to a wall of a container;
- figure 27 is a perspective view of a container having a container cable running opening closed by a cable gripping assembly according to the embodiment of figure 18, in which the cable gripping elements accommodate cables and two connecting screws of the cable gripping assembly are loose;

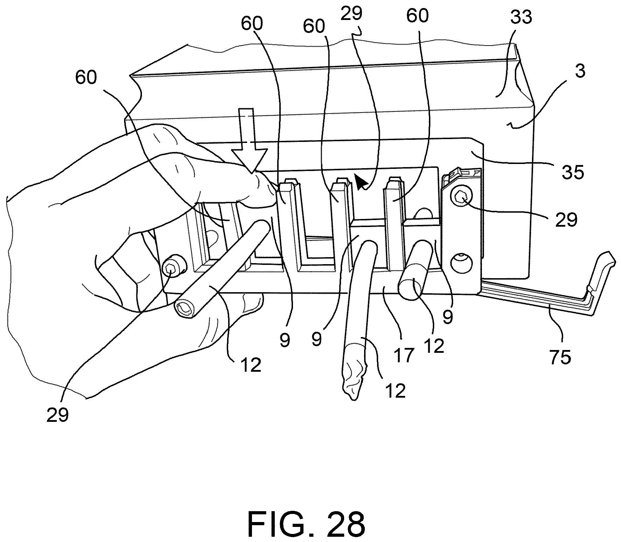

- figure 28 is a perspective representation of the solution in figure 27 in which the connection screws are all loosened and the cable gripping assembly is moved away from the container far enough to open the frame by rotating the two levers and removing the second semi-frame, or cross member at the top, to extract one or more cable gripping elements to replace the cable or change their arrangement or configuration without having to completely disassemble the cable gripping assembly from the container.

### . Description of some preferred embodiments

**.** According to a general embodiment, a cable grommet assembly 1 for running and guiding at least one cable through an opening so that the cable is retained and sealed.

**.** Said assembly 1 comprises a frame 2 which forms a rim 3 which delimits a central opening 4.

**.** Said frame 2 comprises a first half-frame 17 having first half-frame protrusions 53 and recesses 54.

**.** Said frame 2 comprises a second half-frame 18 having second half-frame protrusions 56 and recesses 57.

**.** When said first half-frame 17 is connected to said second half-frame 53, thus forming said frame 2 defining a rim 3 which delimits a central opening 4, at least some first half-frame recesses 54 accommodate at least some of the second half-frame protrusions 56.

**.** When said first half-frame 17 is connected to said second half-frame 18, thus forming said frame 2 which forms a rim 3 which delimits a central opening 4, at least some second half-frame recesses 57 accommodate at least some of the first half-frame protrusions 53.

**.** Said assembly 1 comprises at least one cable gripping element 9.

**.** Said frame 2 comprises at least one frame seat 7 adapted to accommodate a portion of a cable gripping element 9.

**.** Said cable gripping element 9 comprises at least one coupling element 14.

**.** Said at least one coupling element 14 when the gripping element 9 is inserted in the frame 2 is inserted into said at least one frame seat 7 so that said at least one cable gripping element 9 at least partially obstructs said central opening 4.

**.** Said first half-frame 17 comprises at least one first partition seat 58.

**.** Said second half-frame 18 comprises at least a second partition seat 59.

**.** Said cable grommet assembly 1 comprises at least one partition element 60 which comprises at least a first bulge 61 and at least a second bulge 62.

**.** When said first half-frame 17 is connected to said second half-frame 18, thus forming said frame 2 which forms a rim 3 which delimits a central opening 4, said at least one first partition element bulge 61 is inserted into said at least a first partition seat 58, and said at least one partition element second bulge 62 is inserted in said at least one second partition seat 59.

**.** Said at least one partition element 60 removably divides said central opening 4 into at least two central openings, also named first and second central opening partitions 63, 64, each being of a smaller size than said central opening 4.

**.** According to an embodiment, said at least partition element first and second bulges 61, 62 are either conical or frustoconical in shape. Said at least first and second partition seats 58, 59 are conical or frustoconical in shape.

**.** According to an embodiment, said cable gripping element 9 comprises at least one cable opening 11 or at least one pierceable membrane which forms said cable opening 11.

**.** According to an embodiment, said at least one partition element first bulge 61 consists of a single bulge.

**.** According to an embodiment, said at least a second partition element bulge 62 consists of two bulges arranged parallel to each other and at least partially longitudinally offset relative to said first partition element bulge 61.

**.** According to an embodiment, said at least one partition element 60 is a straight-extending column element which is arranged parallel to an adjacent further partition element 60 or a side 19, 20, 21, 22 of one of said half-frames 17, 18.

**.** According to an embodiment, said at least one partition element 60 is a straight-extending column element which is arranged parallel to a side 19, 21 of said first half-frame 17 arranged substantially orthogonal to said second half-frame 18.

**.** According to an embodiment, said at least one partition element 60 is built so that the insertion of at least one cable gripping element 9 establishes the position of at least one partition element 60 in the frame by virtue of the force imparted by the cable gripping element 9 to the at least one partition element 60.

**.** According to an embodiment, when said partition element 60 is inserted into the first and second half-frame partition seats 58, 59, it rests with some partition element support surfaces 65, 66 thereof against a peripheral frame surface 6 which delimits said central opening 4, to rest in a sealing manner when sandwiched between said first and second half-frames 17, 18 connected to each other.

**.** According to an embodiment, said cable gripping element 9 is accommodated in said central opening 4 and sealingly rests on half-frame surfaces and/or partition element surfaces and/or an adjacent cable gripping element 9 to create a seal with said surfaces.

**.** According to an embodiment, said first half-frame 17 is U-shaped, with a first side 19 of first half-frame, a second side of first half-frame, also named first half-frame base 20, arranged orthogonal to said first side 19 of first half-frame, and a third side 21 of first half-frame arranged parallel to said first side 19 of first half-frame and orthogonal to said second side 20 of first half-frame.

**.** According to an embodiment, said second half-frame 18 is a cross member which closes the U-shaped first half-frame 17.

**.** According to an embodiment, said first and second half-frame 17, 18 comprise a first and second half-frame outer edge 65, 66.

**.** According to an embodiment, said outer first half-frame 65 comprises a first half-frame edge seat 67.

**.** According to an embodiment, said outer second half-frame 66 comprises a second half-frame edge seat 68.

**.** According to an embodiment, said cable grommet assembly 1 comprises at least one locking element 69 freely rotatably connected to one of the half-frames 17, 18 and coupled, in the closed position, to the other half-frame 19, 18, thus closing the rim 3 and forcing the first half-frame 17 against the second half-frame 18.

**.** According to an embodiment, when said locking element 69 is in the closed position, said locking element 69 is at least partially accommodated in said first and second half-frame edge seats 67, 68.

**.** According to an embodiment, when said locking element 69 is in the closed position, said locking element 69 is substantially entirely accommodated in said first and second half-frame edge seats 67, 68 except for a locking element gripping portion 70.

**.** According to an embodiment, said cable grommet assembly 1 comprises at least one locking element 69 freely rotatably connected to one of the half-frames 17 and coupled, in the closed position, to the other half-frame 19, thus closing the rim 3 and forcing the first half-frame 17 against the second half-frame 18.

**.** According to an embodiment, said locking element 69 is a snap-coupling clamp 71 with hook-shaped end 72 rotatably connected at a lever fulcrum 73 to one of said half-frames 19, 18.

**.** According to an embodiment, said hook 72 grasps an undercut seat 74 of the other half-frame 18, 19.

**.** According to an embodiment, said locking element 69 is a lever 75 rotatably connected to a half-frame 17, 18 and which, under closing conditions, is snap-coupled to the other half-frame 18, 17.

**.** According to an embodiment, said locking element 69 is a lever 75 rotatably connected to a half-frame 17, 18 and which, under closing conditions, is snap-coupled to the other half-frame 18, 17.

. According to an embodiment, said lever 75 embraces a portion of the outer first and second half-frame edge 65, 66.

**.** According to an embodiment, said locking element 69 consists of two levers 75 rotatably connected to said first half-frame 17 and which, under closing conditions, are snap-coupled to said second half-frame 18.

**.** According to an embodiment, said levers 75 embrace a portion of the outer first half-frame edge 65 and are coupled to the end portion of the second half-frame edge 66.

**.** According to an embodiment, said levers 75 are partially accommodated in first and second half-frame edge seats 67, 68.

**.** According to an embodiment, at least one half-frame 17, 18 comprises at least one screw seat 28 adapted to receive a connector 29 for connecting the cable grommet assembly 1 to a container or cabinet or support 33.

**.** According to an embodiment, said first half-frame 17 is U-shaped, with a first side 19 of first half-frame, a second side of first half-frame, also named first half-frame base 20, arranged orthogonal to said first side 19 of first half-frame, and a third side 21 of first half-frame arranged parallel to said first side 19 of first half-frame and orthogonal to said second side 20 of first half-frame.

**.** According to an embodiment, said second half-frame 18 is a cross member which closes the U-shaped first half-frame 17.

**.** According to an embodiment, said U-shaped first half-frame 17 comprises at least one screw seat 28 adapted to receive a connector screw 29 for connecting the cable grommet assembly 1 to a container or cabinet or support 33.

**.** The present invention further relates to a method for dividing a central opening 4 of a cable grommet assembly 1, wherein it includes the steps of
- providing a cable grommet assembly 1 for running and guiding at least one cable 12 through an opening so that the cable 12 is retained and sealed; wherein
- said assembly 1 comprises a frame 2 which forms a rim 3 delimiting a central opening 4;
   said frame 2 comprises
- a first half-frame 17 having first half-frame protrusions 53 and recesses 54;
- a second half-frame 18 having second half-frame protrusions 56 and recesses 57;
   wherein when said first half-frame 17 is connected to said second half-frame 53, thus forming said frame 2 which forms a rim 3 delimiting a central opening 4, at least some first half-frame recesses 54 accommodate at least some of the second half-frame protrusions 56, and
   wherein when said first half-frame 17 is connected to said second half-frame 18, thus forming said frame 2 which forms a rim 3 delimiting a central opening 4, at least some second half-frame recesses 57 accommodate at least some of the first half-frame protrusions 53;
- said frame 2 comprises at least one frame seat 7;
- said assembly 1 comprises at least one cable gripping element 9;
- said cable gripping element 9 comprises at least one coupling element 14;
- said at least one coupling element 14 is inserted into said at least one frame seat 7 so that said at least one cable gripping element 9 at least partially obstructs said central opening 4; and wherein
- said first half-frame 17 comprises at least a first partition seat 58;
- said second half-frame 18 comprises at least a second partition seat 59;
- said cable grommet assembly 1 comprises at least one partition element 60 which comprises at least a first bulge 61 and at least a second bulge 62;
- when said first half-frame 17 is connected to said second half-frame 18, thus forming said frame 2 which forms a rim 3 which delimits a central opening 4, inserting said at least a first partition element bulge 61 into said at least a first partition seat 58, and
- inserting said at least a second partition element bulge 62 into said at least a second partition seat 59;
- removably dividing, with said at least one partition element 60, said central opening 4 into at least two central openings, also named first and second central opening partitions 63, 64, each being of a smaller size than said central opening 4.

**.** The present invention further relates to a method for restoring a central opening 4 of a cable grommet assembly 1, wherein it includes the steps of
- providing a cable grommet assembly 1 for running and guiding at least one cable 12 through an opening so that the cable 12 is retained and sealed; wherein
- said assembly 1 comprises a frame 2 which forms a rim 3 delimiting a central opening 4;
   said frame 2 comprises
- a first half-frame 17 having first half-frame protrusions 53 and recesses 54;
- a second half-frame 18 having second half-frame protrusions 56 and recesses 57;
   wherein when said first half-frame 17 is connected to said second half-frame 53, thus forming said frame 2 which forms a rim 3 delimiting a central opening 4, at least some first half-frame recesses 54 accommodate at least some of the second half-frame protrusions 56, and
   wherein when said first half-frame 17 is connected to said second half-frame 18, thus forming said frame 2 which forms a rim 3 delimiting a central opening 4, at least some second half-frame recesses 57 accommodate at least some of the first half-frame protrusions 53;
- said frame 2 comprises at least one frame seat 7;
- said assembly 1 comprises at least one cable gripping element 9;
- said cable gripping element 9 comprises at least one coupling element 14;
- said at least one coupling element 14 is inserted into said at least one frame seat 7 so that said at least one cable gripping element 9 at least partially obstructs said central opening 4; and wherein
- said first half-frame 17 comprises at least a first partition seat 58;
- said second half-frame 18 comprises at least a second partition seat 59;
- said cable grommet assembly 1 comprises at least one partition element 60 which comprises at least a first bulge 61 and at least a second bulge 62;
- when said first half-frame 17 is disconnected from said second half-frame 18, removing said at least a first partition element bulge 61 from said at least a first partition seat 58, and
- removing said at least a second partition element bulge 62 from said at least a second partition seat 59;
- removing said at least one partition element 60 from said central opening 4 which formed two central openings, also referred to as first and second central opening partitions 63, 64, each being of a smaller size than said central opening 4, thus restoring a larger central opening 4.

**.** To meet contingent and specific needs, the person skilled in the art may make several changes and adaptations to the above-described embodiments and may replace elements with others which are functionally equivalent, without however departing from the scope of the following claims.

**.** According to an embodiment, said cable gripping element 9 comprises at least one cable opening 11 or at least one pierceable membrane which forms said cable opening 11.

**.** According to an embodiment, said frame side 5 comprises at least one frame peripheral surface 6 facing said central opening 4.

**.** According to an embodiment, said cable gripping element 9 comprises a peripheral rubber grommet surface 10 which externally surrounds said cable gripping element 9.

**.** According to an embodiment, said cable gripping element 9 comprises at least one cable opening 11 adapted to receive a cable portion 12 with force coupling.

**.** According to an embodiment, said cable gripping element 9 comprises a slot 13.

**.** According to an embodiment, said slot 13 connects said cable opening 11 with said peripheral rubber grommet surface 10 thereby making it possible to spread said cable gripping element 9 elastically for fitting it either over or astride said cable portion 12.

**.** According to an embodiment, at least one portion of said peripheral rubber grommet surface 10 cooperates with said peripheral frame surface 6 or adjacent cable gripping element 9 to form a force coupling between said cable gripping element 9 and said frame 2 or an adjacent cable gripping element 9.

**.** According to an embodiment, at least one portion of said peripheral rubber grommet surface 10 cooperates with said peripheral frame surface 6 to form a geometric and force coupling between said cable gripping element 9 and said frame 2 when said central opening 4 is completely surrounded by said frame 2 and in operating conditions and said central opening 4 is completely obstructed by said at least one cable gripping element 9.

**.** According to an embodiment, said cable gripping element 9, or rubber grommet, is a plurality of cable gripping elements 9 available adjacent to one another.

**.** According to an embodiment, said plurality of cable gripping elements 9 are arranged side by side and with their peripheral rubber grommet surfaces 10 in contact with one another or with said peripheral frame surface 6.

**.** According to an embodiment, when said frame 2 is closed and in operating conditions, said plurality of cable gripping elements 9 are force-coupled to one another and said frame 2 while applying a compression force on the cable 12 or the cables 12 received in said cable openings 11, thereby sealing the cable 12 and retaining the cable 12 itself with force.

**.** According to an embodiment, said cable gripping element 9 comprises at least one rubber grommet ridge 24 which protrudes from said at least one peripheral rubber grommet surface 10 and is adapted to couple geometrically with at least one rubber grommet seat 25 provided in an adjacent cable gripping element 9 and/or in at least one frame side 5; 19, 20, 22, 23.

**.** According to an embodiment, said cable gripping element 9 comprises at least one rubber grommet ridge 24 which protrudes from said at least one peripheral rubber grommet surface 10 and is adapted to geometrically and intimately couple with at least one rubber grommet seat 25 provided in an adjacent cable gripping element 9 and/or in at least one frame side 5; 19, 20, 22, 23.

**.** According to an embodiment, said rubber grommet ridge 24 comprises tampered or conical sides.

**.** According to an embodiment, said rubber grommet seat 25 comprises tapered or conical flanks complementary to said tapered or conical flanks of at least one rubber grommet ridge 24.

**.** According to an embodiment, said cable gripping element 9 comprises at least one of said peripheral rubber grommet surfaces 10 which is a flat rubber grommet surface 45 and is adapted to rest on a flat surface of an adjacent cable gripping element 9 or at least one frame side 5; 19, 20, 22, 23.

**.** According to an embodiment, said assembly comprises a plurality of cable gripping elements 9, and at least one of the cable gripping elements 9 is devoid of said cable opening 11 and is used as an element for closing a portion of said central opening 4.

**.** According to an embodiment, said assembly comprises a plurality of cable gripping elements 9 and at least one of the cable gripping elements 9 is devoid of said coupling element 14.

**.** According to an embodiment, said central opening 4 having a predetermined extension determined relative to said cornice 3, and said predetermined extension of said central opening 4 corresponds to a multiple of extension of a cable gripping element 9 so that this multiple of cable gripping elements 9 when placed side by side completely obstruct said central opening 4 and which couple with force with said frame 2 when it is closed and in operating conditions.

**.** According to an embodiment, said frame 2 comprises a resting surface 31 for resting said frame 2 on a wall 32 in which a cable running opening 34 is provided.

**.** According to an embodiment, said assembly comprises at least one frame gasket 35 arranged on said resting surface 31 and adapted to be interposed between said frame 2 and said wall 32 for a sealed coupling.

**.** According to an embodiment, said frame gasket 35 is a plurality of frame seals 35, each adapted to couple with a semi-frame 17, 18.

**.** According to an embodiment, said frame gasket 35 comprises at least one coupling seal element 39 adapted to be inserted in at least one seal coupling seat 40 provided in said frame 2.

**.** According to an embodiment, said frame 2 comprises at least one screw seat 28 forming a through-hole adapted to receive fixing means or connecting screws 29 of the frame 2 to a wall 32, e.g., of a container 33 in which a cable running opening 34 is obtained, which opening is completely obstructed by said assembly 1 when it is closed in operating conditions and resting against the wall 32 in its edge portion adjacent to said container cable running opening 34.

### LIST OF REFERENCES

- 1: grommet assembly
- 2: frame
- 3: rim
- 4: central opening
- 5: frame side
- 6: peripheral frame surface which delimits the central opening
- 7: frame seat for accommodating a cable gripping element portion
- 8: undercut portion
- 9: cable gripping element
- 10: rubber grommet peripheral surface
- 11: cable opening
- 12: cable
- 13: slot
- 14: cable gripping element coupling element
- 17: first half-frame
- 18: second half-frame
- 19: first half-frame first side or first branch of the U
- 20: first half-frame second side or base of the U
- 21: first half-frame third side or second branch of the U
- 22: second half-frame first side
- 23: second half-frame second side
- 24: rubber grommet ridge
- 25: rubber grommet seat
- 28: screw seat
- 29: connection screw
- 31: frame supporting surface
- 32: wall
- 33: container
- 34: container cable running opening
- 35: frame gasket
- 37: grooves
- 53: first half-frame protrusion
- 54: first half-frame recess
- 56: second half-frame protrusion
- 57: second half-frame recess
- 58: first half-frame first partition seat
- 59: second half-frame second partition seat
- 60: partition element
- 61: partition element first bulge
- 62: partition element second bulge
- 63: central opening first partition
- 64: central opening second partition
- 65: first half-frame outer edge
- 66: second half-frame outer edge
- 67: first half-frame edge seat
- 68: second half-frame edge seat
- 69: locking element
- 70: locking element gripping portion
- 71: snap coupling clamp
- 72: hook-shaped end
- 73: lever fulcrum
- 74: undercut seat
- 75: lever

## Claims

1. A cable grommet assembly (1) for running and guiding at least one cable (12) through an opening so that the cable (12) is retained and sealed;
- said assembly (1) comprises a frame (2) which forms a rim (3) delimiting a central opening (4);
said frame (2) comprises
- a first half-frame (17) having first half-frame protrusions (53) and recesses (54);
- a second half-frame (18) having second half-frame protrusions (56) and recesses (57);
wherein when said first half-frame (17) is connected to said second half-frame (18), thus forming said frame (2) which forms a rim (3) delimiting a central opening (4), at least some first half-frame recesses (54) accommodate at least some of the second half-frame protrusions (56), and
wherein when said first half-frame (17) is connected to said second half-frame (18), thus forming said frame (2) which forms a rim (3) delimiting a central opening (4), at least some second half-frame recesses (57) accommodate at least some of the first half-frame protrusions (53);
- said frame (2) comprises at least one frame seat (7);
- said assembly (1) comprises at least one cable gripping element (9);
- said cable gripping element (9) comprises at least one coupling element (14);
- said at least one coupling element (14) is inserted into said at least one frame seat (7) so that said at least one cable gripping element (9) at least partially obstructs said central opening (4); **characterized in that**
- said first half-frame (17) comprises at least a first partition seat (58) ;
- said second half-frame (18) comprises at least a second partition seat (59);
- said cable grommet assembly (1) comprises at least one partition element (60) which comprises at least a first bulge (61) and at least a second bulge (62);
wherein when said first half-frame (17) is connected to said second half-frame (18), thus forming said frame (2) which forms a rim (3) delimiting a central opening (4), said at least a first partition element bulge (61) is inserted into said at least a first partition seat (58), and said at least a second partition element bulge (62) is inserted into said at least a second partition seat (59), wherein said at least one partition element (60) removably divides said central opening (4) into at least two central openings, also referred to as first and second central opening partitions (63, 64), each being of a smaller size than said central opening (4).

2. A cable grommet assembly (1) according to claim 1, wherein
- said at least first and second partition element bulges (61, 62) are conical or frustoconical in shape; and wherein
- said at least first and second partition seats (58, 59) are conical or frustoconical in shape; and/or wherein
- said cable gripping element (9) comprises at least one cable opening (11) or at least one pierceable membrane which forms said cable opening (11) .

3. A cable grommet assembly (1) according to claim 1 or 2, wherein
- said at least a first partition element bulge (61) is a single bulge; and wherein
- said at least a second partition element bulge (62) consists of two bulges arranged parallel to each other and at least partially longitudinally offset relative to said first partition element protrusion (61).

4. A cable grommet assembly (1) according to any one of the preceding claims, wherein
- said at least one partition element (60) is a straight-extending column element which is arranged parallel to an adjacent further partition element (60) or to a side (19, 20, 21, 22) of one of said half-frames (17, 18);
or wherein
- said at least one partition element (60) is a straight-extending column element which is arranged parallel to a side (19, 21) of said first half-frame (17) arranged substantially orthogonal to said second half-frame (18);
or wherein
- said at least one partition element (60) is built so that the insertion of at least one cable gripping element (9) establishes the position of at least one partition element (60) in the frame by virtue of the force imparted by the cable gripping element (9) to the at least one partition element (60).

5. A cable grommet assembly (1) according to any one of the preceding claims, wherein,
when said partition element (60) is inserted into the first and second half-frame partition seats (58, 59), it rests with some partition element support surfaces (65, 66) thereof against a peripheral frame surface (6) delimiting said central opening (4), to rest in a sealing manner when sandwiched between said first and second half-frames (17, 18) connected to each other.

6. A cable grommet assembly (1) according to any one of the preceding claims, wherein
- said cable gripping element (9) is accommodated in said central opening (4) and sealingly rests on half-frame surfaces and/or partition element surfaces and/or an adjacent cable gripping element (9) to create a seal with said surfaces.

7. A cable grommet assembly (1) according to any one of the preceding claims, wherein
- said first half-frame (17) is U-shaped, with a first side (19) of first half-frame, a second side of first half-frame, also referred to as a first half-frame base (20), arranged orthogonal to said first side (19) of first half-frame, and a third side (21) of first half-frame arranged parallel to said first side (19) of first half-frame and orthogonal to said second side (20) of first half-frame;
and wherein
- said second half-frame (18) is a cross member which closes the U-shaped first half-frame (17).

8. A cable grommet assembly (1) according to any one of the preceding claims, wherein
- said first and second half-frames (17, 18) comprise an outer first and second half-frame edge (65, 66); and wherein
- said outer first half-frame edge (65) comprises a first half-frame edge seat (67); and wherein
- said outer second half-frame edge (66) comprises a second half-frame edge seat (68); and wherein
- said cable grommet assembly (1) comprises at least one locking element (69) freely rotatably connected to one of the half-frames (17, 18) and is coupled, in the closed position, to the other half-frame (19, 18), thus closing the rim (3) and forcing the first half-frame (17) against the second half-frame (18); and wherein
- when said locking element (69) is in the closed position, said locking element (69) is at least partially accommodated in said first and second half-frame edge seats (67, 68);
or
- when said locking element (69) is in the closed position, said locking element (69) is substantially entirely accommodated in said first and second half-frame edge seats (67, 68), except for a locking element gripping portion (70);
or
- said cable grommet assembly (1) comprises at least one locking element (69) freely rotatably connected to said first half-frame (17) and coupled, in the closed position, to the second half-frame (19), thus closing the rim (3) and forcing the first half-frame (17) against the second half-frame (18).

9. A cable grommet assembly (1) according to claim 8, wherein
- said locking element (69) is a snap-coupling clamp (71) with a hook-shaped end (72), rotatably connected at a lever fulcrum (73) to one of said half-frames (19, 18); and wherein
- said hook end (72) grasps an undercut seat (74) of the other half-frame (18, 19) as an undercut.

10. A cable grommet assembly (1) according to claim 8, wherein
- said locking element (69) is a lever (75) rotatably connected to a half-frame (17, 18) and which, under closing conditions, is snap-coupled to the other half-frame (18, 17);
or
- said locking element (69) is a lever (75) rotatably connected to a half-frame (17, 18) and which, under closing conditions, is snap-coupled to the other half-frame (18, 17); and wherein
- said lever (75) embraces a portion of the outer first and second half-frame edge (65, 66);
or
- said locking element (69) consists of two levers (75) rotatably connected to said first half-frame (17) and which, under closing conditions, are snap-coupled to said second half-frame (18); and wherein
- said levers (75) embrace a portion of the outer first half-frame edge (65) and are coupled to the end portion of the second half-frame edge (66); and wherein
- said levers (75) are partially accommodated in first and second half-frame edge seats (67, 68).

11. A cable grommet assembly (1) according to any one of the preceding claims, wherein
- at least one half-frame (17, 18) comprises at least one screw seat (28) adapted to receive a connector screw (29) for connecting the cable grommet assembly (1) to a container or cabinet or support (33); or
- said first half-frame (17) is U-shaped, with a first side (19) of first half-frame, a second side of first half-frame, also referred to as a first half-frame base (20), arranged orthogonal to said first side (19) of first half-frame, and a third side (21) of first half-frame arranged parallel to said first side (19) of first half-frame and orthogonal to said second side (20) of first half-frame; and wherein
- said second half-frame (18) is a cross member which closes the U-shaped first half-frame (17); and wherein
- said U-shaped first half-frame (17) comprises at least one screw seat (28) adapted to receive a connector screw (29) for connecting the cable grommet assembly (1) to a container or cabinet or support (33) .

12. A method for dividing a central opening (4) of a cable grommet assembly (1), wherein it includes the steps of
- providing a cable grommet assembly (1) for running and guiding at least one cable (12) through an opening so that the cable (12) is retained and sealed; wherein
- said assembly (1) comprises a frame (2) which forms a rim (3) delimiting a central opening (4);
said frame (2) comprises
- a first half-frame (17) having first half-frame protrusions (53) and recesses (54);
- a second half-frame (18) having second half-frame protrusions (56) and recesses (57);
wherein when said first half-frame (17) is connected to said second half-frame (53), thus forming said frame (2) which forms a rim (3) delimiting a central opening (4), at least some first half-frame recesses (54) accommodate at least some of the second half-frame protrusions (56), and
wherein when said first half-frame (17) is connected to said second half-frame (18), thus forming said frame (2) which forms a rim (3) delimiting a central opening (4), at least some second half-frame recesses (57) accommodate at least some of the first half-frame protrusions (53);
- said frame (2) comprises at least one frame seat (7);
- said assembly (1) comprises at least one cable gripping element (9);
- said cable gripping element (9) comprises at least one coupling element (14);
- said at least one coupling element (14) is inserted into said at least one frame seat (7) so that said at least one cable gripping element (9) at least partially obstructs said central opening (4); and wherein
- said first half-frame (17) comprises at least a first partition seat (58);
- said second half-frame (18) comprises at least a second partition seat (59);
- said cable grommet assembly (1) comprises at least one partition element (60) which comprises at least a first bulge (61) and at least a second bulge (62);
- when said first half-frame (17) is connected to said second half-frame (18), thus forming said frame (2) which forms a rim (3) delimiting a central opening (4), inserting said at least a first partition element bulge (61) into said at least a first partition seat (58), and
- inserting said at least a second partition element bulge (62) into said at least a second partition seat (59);
- removably dividing, with said at least one partition element (60), said central opening (4) into at least two central openings, also referred to as first and second central opening partitions (63, 64), each being of a smaller size than said central opening (4).

13. A method for restoring a central opening (4) of a cable grommet assembly (1), wherein it includes the steps of
- providing a cable grommet assembly (1) for running and guiding at least one cable (12) through an opening so that the cable (12) is retained and sealed; wherein
- said assembly (1) comprises a frame (2) which forms a rim (3) delimiting a central opening (4);
said frame (2) comprises
- a first half-frame (17) having first half-frame protrusions (53) and recesses (54);
- a second half-frame (18) having second half-frame protrusions (56) and recesses (57);
wherein when said first half-frame (17) is connected to said second half-frame (53), thus forming said frame (2) which forms a rim (3) delimiting a central opening (4), at least some first half-frame recesses (54) accommodate at least some of the second half-frame protrusions (56), and
wherein when said first half-frame (17) is connected to said second half-frame (18), thus forming said frame (2) which forms a rim (3) delimiting a central opening (4), at least some second half-frame recesses (57) accommodate at least some of the first half-frame protrusions (53);
- said frame (2) comprises at least one frame seat (7);
- said assembly (1) comprises at least one cable gripping element (9);
- said cable gripping element (9) comprises at least one coupling element (14);
- said at least one coupling element (14) is inserted into said at least one frame seat (7) so that said at least one cable gripping element (9) at least partially obstructs said central opening (4); and wherein
- said first half-frame (17) comprises at least a first partition seat (58);
- said second half-frame (18) comprises at least a second partition seat (59);
- said cable grommet assembly (1) comprises at least one partition element (60) which comprises at least a first bulge (61) and at least a second bulge (62);
- when said first half-frame (17) is disconnected from said second half-frame (18), removing said at least a first partition element bulge (61) from said at least a first partition seat (58), and
- removing said at least a second partition element bulge (62) from said at least a second partition seat (59);
- removing said at least one partition element (60) from said central opening (4) which formed two central openings, also referred to as first and second central opening partitions (63, 64), each being of a smaller size than said central opening (4), thus restoring a larger central opening (4).
